Europäisches Patentamt

(19) European Patent Office

Office européen des brevets

(11) Publication number: 0 385 238
A1

# (12) EUROPEAN PATENT APPLICATION

(21) Application number: 90103248.2

(22) Date of filing: 20.02.90

(51) Int. Cl.⁵: A22C 21/04

(30) Priority: 27.02.89 US 315841
11.10.89 US 419716
27.10.89 US 427484

(43) Date of publication of application:
05.09.90 Bulletin 90/36

(84) Designated Contracting States:
DE DK ES FR GB NL

(71) Applicant: Covell, Edward H., III
919 Riverside Drive
Salisbury, Maryland(US)

(72) Inventor: Covell, Edward H., III
919 Riverside Drive
Salisbury, Maryland(US)

(74) Representative: Münzhuber, Robert,
Dipl.-Phys. et al
Patentanwalt Rumfordstrasse 10
D-8000 München 5(DE)

(54) Poultry scalder, scalding system and process.

(57) A process and system of immersion poultry scalding employs counterflow recirculation of scald liquid in a counterdirection to that of the travel of the poultry through the immersion tank. The liquid removed from the tank is filtered and cleaned, sanitized as it is superheated and heats make-up water added to the system to scald temperature before it is returned to the immersion tank. A head trough may be provided for immersing the heads only of the poultry before entering the main part of the immersion tank, and a head trough heat exchanger is provided in the system for heating up the potable make-up water before being supplied to the heat trough. Immediately before reaching the exit station, a conveyor may be arranged for lifting the birds at least partially out of the scald liquid allowing the liquid in the bird feathers to drain before the birds are again immersed in the recirculated liquid at the exit station. Also, the tank liquid may be counterflowed externally in stages from the bird exit station through one or more intermediate stations and to the bird entrance station, and the liquid removed from the tank is filtered, cleaned and sanitized with make-up water being added to the system being heated to scald temperature before it is externally to the scalder via external pumping conduits employed for the staged counterflow.

FIG.4

# POULTRY SCALDER, SCALDING SYSTEM AND PROCESS

## BACKGROUND OF THE INVENTION

This invention relates generally to a poultry immersion scalding system and process in which poultry is conveyed in an open immersion tank containing scalding liquid as the conveyor moves the poultry while hanging by the legs. More particularly, the poultry is conveyed in one direction through the tank and returned to flow in a direction opposite the poultry conveying direction, the liquid thus recirculated being filtered and additional liquid being added and heated before being returned to the immersion tank. In addition, the invention provides for means external to the tank for counterflowing the scald liquid in stages.

For a typical start-up operation of immersion scalders, the immersion tank is filled with clean water and heated to the desired scald temperature. The water can be heated by live steam injection, by steam passing through heat exchange plates in the immersion tank or by hot air and steam injection into the scald water. During operation approximately one quarter of clean tap water is added for every bird moving through the immersion tank. The make-up water is usually at ground temperature, i.e., 65° F. to 70° F. The birds pass through the scald (immersion) tank for 8-16 hours per day. Counting work breaks, the water can be 18 hours old when the last bird exists the scalder.

The fresh make-up water of about one quarter per bird helps maintain the water level in the immersion tank as the birds carry water out in their feathers. Also, the U.S.D.A. normally requires an overflow of water from the scald tank. This provides some dilution of the contaminated water but has very little effect. The cold add water is sometimes added to the tank at a concentrated location, but is normally added through a perforated pipe extending along the scalder for dissipating the cold make-up water so as not to create cold spots in the tank which could defeat the purpose of the scalder.

The flow of water in a scalder allows water to be mixed during conveyance of the poultry along adjacent conveyor runs as the birds travel in opposite directions relative to one another. The flow of water is not directed in a controlled path nor in any purposeful direction.

The typical immersion scalder presents considerable cross-contamination problems. A bird having very little bacteria will pick up bacteria in the water from birds that have passed before it. In many cases bacteria types may be introduced into the bird that it does not have until it is immersed in the scalder.

As well known, a scalder is utilized as part of a poultry processing operation so as to heat the skin of the bird to loosen the feathers allowing the feathers to be plucked at a station after the birds leave the scald tank. The bird's feathers act as insulation preventing heat from reaching the skin.

Im immersion scalding the birds are carried by an overhead conveyor hanging by the feet and are immersed in a hot bath of water. The water is heated and agitated by air injection in the bottom of the scalder or by pumps moving large volumes of water that flow over the birds. During the scalding process the skin and feathers are heated by the heat transfer of hot water (124° to 142° F.) into the bird.

Non-immersion scalders are also known which utilize live steam injection for heating the skin of the bird to loosen the feathers for subsequent plucking. However, since the scalder tank is open, significant steam blow-by from the top of the scalder is experienced with such live steam injection scalders. This steam reaches the surface of the scald water before it completely dissipates into the water.

Factors that contribute to scalding are temperature and time. For a hard scald, higher water temperature could mean less time in the scalder for the heat transfer required to loosen the feathers. This is limited, however, because at temperatures as high as 142° F, the bird may cook. For this reason it is not possible for scald water to be heated sufficiently high to kill many types of bacteria.

Also it takes more time to soft scald the bird than it does for a hard scald. Soft scald is used when the preferred end product is a yellow bird. The outer layer of skin which carries the yellow color is easily overheated and will if overheated be removed from the bird in the pickers along with the feathers. For this reason the temperature is lower than hard scald, although bacteria of many types cannot be killed by the low temperature of the water.

Other factors contributing to temperature and time are bird health, rigor mortis, the Ph of the water, the poultry breed, the weather, the type of immersion scalder, the picking system, the type of kill cut and bleed time.

The soft scald temperature of broiler chickens is about 124° to 130° F. Turkeys are always hard scalded at a temperature between 137° to 140° F. And, the make-up water for immersion scalders usually amounts to one quarter per bird for chickens and one half gallon per bird for turkeys.

The scalder tank is normally constructed to direct the flow of water downwardly onto the birds being conveyed through the tank. Most scalders have agitators with props at the tank bottom to move the water in a direction flowing upwardly and then downwardly onto the birds being conveyed. Normally, several conveyor passes are provided and are separated by partition walls which allow water from different conveyor passes to be intermixed thus, while the birds are moved in opposite directions relative to one another while traveling along adjacent passes, they are cross-contaminated with bacteria remaining in the scalded water.

In accordance with the counter flow principle disclosed in the present application, the flow of water in the scalder tank is counter to the direction the birds are conveyed through the tank. The sanitized water enters the scalder at an exit location of the birds. The contaminated water exits the scalder at the entrance location of the birds. As each bird travels through the scalder, it will be moving into cleaner water all the time.

As the birds are conveyed through the scalder, they drag water with them, thus creating high and low areas at the water level as the water swells. The tank must therefore be of a sufficient width and depth to assure that the birds are sufficiently immersed in the scald water for effective scalding.

Moreover, the agitators normally employed for directing the flow of water downwardly onto the birds being conveyed through the tank must effect sufficient agitation to push down the water onto the birds from the top of the tank and to create an undertow from the tank bottom to maintain the birds under the water level for a given size tank.

An improved scalder tank and counter-flow system to avoid this problem is therefore desirable, as are improvements in steam heating the scald liquid in the tank.

For example, it is known that steam is added by direct injection to the bottom of the scalder or by the provision of heat exchange plates mounted along the sides of the scalder adjacent to the passage of the birds. In a case of live steam injection, steam is added to the scald water at a location beneath the birds or beneath the agitator pumps. In any case, the water must be deep enough for most of the steam to dissipate into the water before reaching the surface of the water, so as to avoid steam blow by. If the steam is added directly beneath the birds, the tank must also be sufficiently deep for the steam not to burn the birds.

In the case of heat exchange plates, the scalder must be sufficiently wide and/or sufficiently deep for the birds not to contact the hot plates.

## SUMMARY OF THE INVENTION

It is therefore an object of the present invention to provide an improved poultry immersion scalding system and process which avoids the problems experienced with known immersion scalders. In accordance with the invention cross-contamination of the birds is substantially avoided, and the scald water is cleaner as it is filtered and sanitized during recirculation. The system can operate continuously in water which is even cleaner after recirculation. The recirculated water is heated using less energy and less make-up water than before.

By screening and filtering the recirculated water a substantial amount of coarse material such as sand and wood chips are removed from the water. In the past with more of these particles in the water the birds were recontaminated as the water passed through the feathers. After the scalding operation the pickers would beat bacteria from these particles into the skin of the birds.

By sanitizing the water surface bacteria on the skin will also be lower and there will be less of such bacteria for the picking machines to beat into the bird.

Although the U.S.D.A. requires that an overflow be maintained at the scalder, with the filtering and sanitizing system of the invention less make-up water will be required for the scalder. This translates into less energy used to heat water. And with less tap water used there is a saving of the cost of water in and out of the plant.

The present system will add heat in a sanitize tank and in a water mixing tank. This heat will be added by heat exchange plates or by steam injection. These tanks are closed vessels to thereby eliminate any steam blow-by.

In accordance with the invention, the flow of water in the scalder tank is counter to the direction the birds are conveyed through the tank. The sanitized water enters the scalder at an exit location of the birds. The contaminated water will exit the scalder at the entrance location of the birds. As each bird travels through the scalder it will be moving into cleaner water all the time.

The water removed from the tank at the entrance end at which the birds are conveyed into the tank is sanitized as it passes in heat exchange relationship with superheated water from a sanitize tank. The heating liquid from the heat exchanger is then combined with fresh make-up water in a mixing tank for yielding sanitized recirculating liquid at a predetermined scald temperature before it is returned to the tank at the exit end of the bird conveyor.

The immersion tank may have a shallow water containing head trough at the entrance end of the bird conveyor into which only the heads of the birds are immersed before being more fully immersed in the tank. The make-up water will flow in heat exchange relationship with the sanitized water and will be thereby heated before flowing to the head trough.

The poultry conveyor may be designed to lift the immersed birds at least partially out of the scalding liquid prior to reaching the exit station for allowing the water in the feathers to drain. The conveyor thereafter again immerses the birds in the recirculated liquid at the exit station such that the clean recirculated water will replace the water that was drained. This could, therefore, aid in the cleaning process of the present system.

In accordance with another feature of the invention, the water dragged by the birds when conveyed through the scalder, plus a volume equal to the recirculated heat treated water, is counterflowed from the bird exit station to the bird entrance station of the scalder by means external to the tank, such as pumps. Thus, the water is counter-flowed from outside the pass along which the birds travel, so that the scalder may be of reduced width and depth. And, agitation required is far less with such an arrangement than that formerly required to force liquid downward from the top on to the birds, and than that required to form an undertow from the tank bottom to maintain the birds immersed in the scalded water.

According to the invention, problems are resolved in live steam injection into the scalder by adding steam at the pump conduits external to the tank, thereby avoiding any over-scalding or burning of the birds, and effecting improved dissipation of the steam before reaching the scald liquid surface thereby eliminating steam blow-by while at the same time avoiding overheating the birds.

The tank liquid is counter-flowed externally of the tank, from and into the bird exit station and into an intermediate station, from and into such intermediate station and into the entrance station, and from and into the outwardly of the tank.

The tank has internal flow means defining a chamber into which the liquid is pumped at such stations, and the tank other than such chamber defines a trough in communication with the chamber and along which the poultry is moved through the tank.

Steam injection means is connected to the pumping means external to the tank to maintain the temperature of the scald liquid in the tank at a predetermined scald temperature, thereby assuring a more complete dissipation of the steam in the tank liquid before reaching the tank surface so as to eliminate steam-blow by.

## BRIEF DESCRIPTION OF THE DRAWINGS

Fig. 1 is a perspective view of part of the immersion tank according to the invention, which may be provided with a head trough;

Figs. 2 and 3 are vertical sectional views of two types of known poultry immersion scalding tanks;

Figs. 4, 5 and 6 are schematic views of various embodiments of the system according to the invention;

Figs. 7 and 8 are schematic views of further embodiments of the poultry scalding system of the present invention;

Fig. 9 is a side view of a scalder tank showing the conveyor arrangement according to an embodiment of the present invention for lifting the birds out of the tank and immersing the birds at the next station;

Fig. 10 is schematic view, in plan, of another embodiment of the scalder tank and scalding system according to the present invention;

Fig. 11 is a side schematic view of the tank and system shown in Fig. 10; and

Fig. 12 is a cross-sectional view taken substantially along the line 3-3 of Fig. 10.

## DETAILED DESCRIPTION OF THE PREFERRED EMBODIMENTS

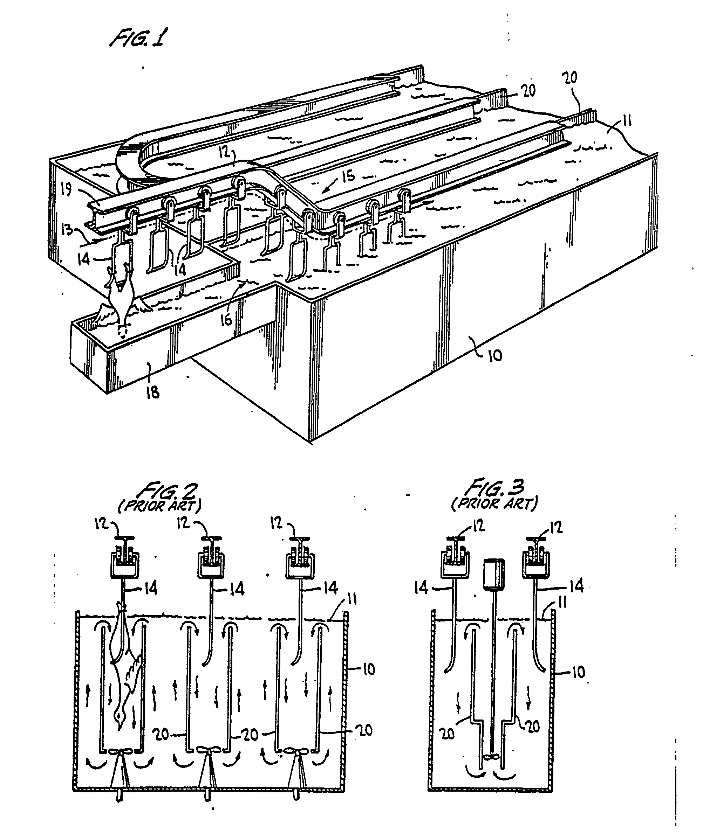

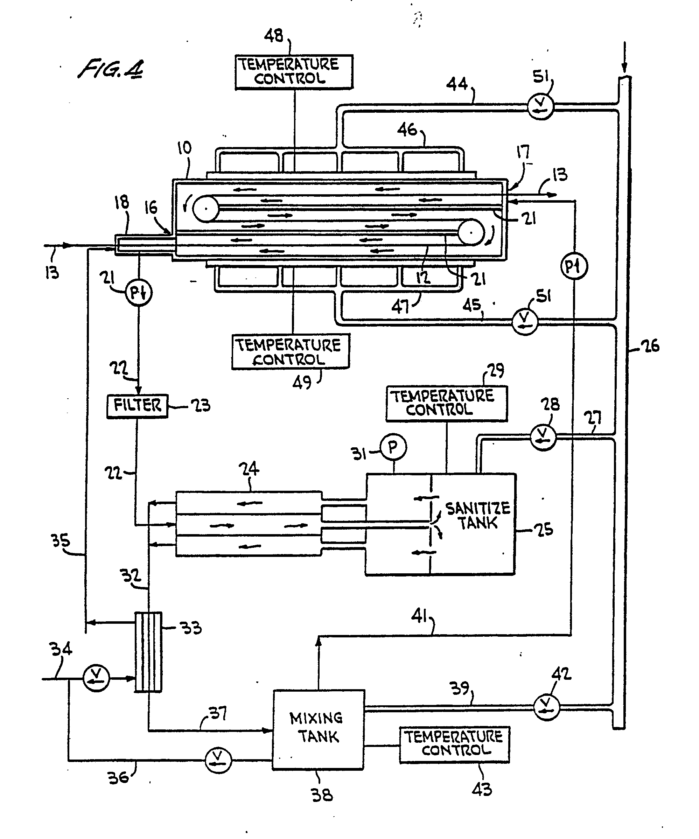

Turning now to the drawings wherein like reference characters refer to like and corresponding parts throughout the several views, a partial view of an immersion tank 10 is shown in Fig. 1 containing scalding liquid 11 at a predetermined scald temperature. A conveyor 12 which may have several runs back-and-forth is positioned above the tank for moving poultry in one direction through the tank shown by arrows 13 shown in Figs. 1, 4-8 and 10-12. The conveyor is of known construction having movable shanks 14 suspended therefrom to which the legs of the birds are secured in some manner such that the birds are fully immersed in the liquid 11 when dipping downwardly into the liquid at the end of bend 15 of the conveyor. The conveyor moves the birds from an entrance station 16 at the tank to an exit station 17 (Fig. 4) at the tank in the direction of arrows 13.

The scalder tank may have a relatively shallow head trough 18 at entrance station 16, the trough containing fresh water slightly heated above ground water temperature and supplied in a manner to be described more fully hereinafter. The conveyor has an elevated section 19 for suspending the birds such that the heads only of the birds are immersed in the fresh head trough water. Thus, if the bird is still breathing at this stage of the poultry processing operation it will inhale relatively clean water into its lungs and air sacs. The bird will therefore draw in water having a much lower bacteria count than when immersed in prior systems.

In one embodiment of the invention, the scalder tank is constructed to direct the flow of the water downwardly onto the birds being conveyed through the tank as in the manner shown in Figs. 2 or 3 illustrating two different types of immersion scalders. Most scalders have agitators with props at the tank bottom to move the water in a direction of the arrows shown in these two Figures. Some scalders also utilize pumps to move air into the bottom of the scalder to submerge the bird. Fig. 2 illustrates a 3-pass conveyor and Fig. 3 shows a 2-pass conveyor, although more conveyor passes may be provided when desired. And, although entrance and exit stations 16 and 17 are shown in Fig. 4 located at opposite ends of immersion tank 10, it should be pointed out that the entrance and exit stations may be located at the same end of the tank depending on the number of conveyor passes through the tank. Moreover, as is well known, the conveyor passes are separated by partition walls 20 which allow water from different conveyor passes to be intermixed. Thus, while the birds are moved in opposite directions relative to one another while traveling along adjacent passes, they are cross-contaminated with bacteria remaining in the scald water in those immersion scalders not employing the system of the invention.

In accordance with the counter flow principle of the invention, the bacteria contaminated water will be removed at entrance station 16 of the scalder at the location at which the birds enter the scalder during operation of the conveyor. Removal may be effected by a pump 21 or by gravity, and will flow via conduit 22 through a screening and filtering station 23 at which wood chips, sand and other particles removed from the birds while in the scalder will be filtered and screened from the removed scald water. The filtering will help maintain the heat exchangers used in the present system clean and operating at the highest efficiency. And, by filtering these particles from the removed scald water it will be assured that a reduced amount of such particles will cling to the birds before exiting the scalder. Thus, the pickers will not beat as much of this foreign material into the skin of the birds during the subsequent poultry processing operation.

The filtered liquid through conduit 22 flows through a heat exchanger 24 and into a superheated water tank or sanitize tank 25. Tank 25 is a closed vessel containing a quantity of water which is superheated to about 175° F. using, for example, live steam injection via a steam conduit 26 having a branch line 27 connected through suitable valving 28 to tank 25. A suitable temperature control unit 29 on tank 25 may be set for operating valve 28 to maintain the temperature of the superheated water in tank 25 to a desired level.

The filtered liquid from conduit 22 is typically at the same scald temperature of 128° F. as that in immersion tank 10. This filtered liquid flows through heat exchanger 24, into tank 25, mixes with the liquid in the sanitize tank and the mixed liquid flows at or near the superheat temperature in the direction of the arrows out of tank 25 and through heat exchanger 24. This heat exchanger is constructed in any normal manner having a plurality of heat exchange plates effecting heat exchange between the oppositely directed flow of liquid therein, such that the filtered liquid increases in temperature as the superheated water decreases in temperature during this heat exchange, and the liquid at the exit end of the heat exchanger flows into conduit 32 at a predetermined temperature of about 133° F., for example, which can be maintained by the heat exchanger and the control temperature in the sanitize tank.

The sanitize tank functions to kill the bacteria in the filtered water entering the tank as BTU's are added to the tank 25 water via conduits 26, 27 elevating the temperature therein to about 175° f. The superheated recirculated water will then exit through heat exchanger 24 passing off heat to the incoming filtered water such that this completes the loop of the bacteria killing segment of the present system.

The still very warm heating liquid in conduit 32 then passes through another heat exchanger 33 provided for head trough 18. Potable ground water, typically at a temperature of about 65° F., is supplied from a source (not shown) through conduit 34 to heat exchanger 33 and exits through conduit 35 after passing in heat exchange relationship with the heating liquid flowing from conduit 32 through heat exchanger 33. The heat exchanger 33 is constructed so as to elevate the temperature of the ground water to about 90° F. after passing therethrough in heat exchange relationship with the heating liquid. The liquid in conduit 35 flows into the shallow head trough 18 as fresh water which will overflow into the main portion of the immersion tank. This fresh water will be part of the fresh potable ground water required to be added to the immersion tank for replenishing any loss of liquid from the tank as carried out by the birds and for maintaining scalder tank overflow if desired. The heads only of the birds are immersed in the head trough containing clean water, as illustrated in Fig. 1. Thus, should the birds still be breathing at this stage of the poultry processing operation they will inhale relatively clean water into their lungs and air sacs. The birds will therefore draw in water at a much lower bacteria count compared to prior immersion scalding systems.

Head trough heat exchanger 33 may be located in the external liquid recirculating system shown in Fig. 4 either upstream or downstream of the sanitize thank 25 depending on the desires of the plant. And, it should be pointed out that some plant operations may not require or desire a head trough, in which case the head trough and/or its heat exchanger may be eliminated from the system without departing from the invention.

The potable ground water used as make-up water for the system likewise flows through a branch conduit 36 into a mixing tank 36, and the heating liquid exiting heat exchanger 33 flows through a conduit 37 into a tank 38 where it is mixed (pooled) with the 65° F. potable water. Tank 38 is a closed vessel and the temperature of the mixed liquid therein is maintained at the desired level via steam injection, or the like, as through a branch conduit 39 passing through a suitable valve 42. The temperature in tank 30 is maintained at the desired level via steam injection, or the like, as through a branch conduit 39 passing through a suitable valve 42. The temperature in tank 30 is maintained at the desired level by a control 43 which may regulate valve 42. The mixture of heating liquid and potable water in tank 38 is heated to the scald temperature, which may be 128° F., so that the liquid exiting the tank 38 through conduit 41 is returned to immersion tank 10 at exit station 17 for recirculating scald liquid at the scald temperature through tank 10 in a direction opposite the direction of travel of the birds being conveyed through tank 10. The sanitized recirculating liquid being returned to the immersion tank through conduit 41 is substantially free of bacteria and includes make-up water which is heated partially by the heating liquid flowing through conduit 37 and supplemented by steam injection via branch conduit 39, so that cleaner water is recirculated through the immersion tank with the present system at a rate which may, for examplem, be about to equal the liquid volume of the immersion tank liquid in 30 minutes.

Live steam may also be injected into the immersion tank via branch conduits 44 and 45 and via manifold branches 46 and 47 to assure maintenance of liquid 11 in tank 10 at the desired scald temperature. Temperature control units 48 and 49 may be provided for sensing and regulating the temperature of liquid 11 in combination with valves 51.

The energy requirements to heat the make-up water and the BTU's provided to the aforedescribed system by the superheat operation for the counterflow immersion scalding system of the invention, will now be set forth.

A Low Boy style scalder, typically shown in Fig. 3, will be used in the following chicken scalding example as it is the most commonly used and is designed to contain the least amount of water.

The U.S.D.A. normally requires an overflow discharge at the scalder during operation. For this purpose, one quart of water per bird is usually added to the scalder. The bird removes about one pint clinging to its feathers as it exits the immersion tank thus leaving about one pint per bird for the overflow discharge. However, this one pint per bird is such a low volume that it would have little effect on the operation even during counterflow movement at a restricted rate of flow without the application of the present system.

It will be shown that a much greater rate of low of liquid can be superheated and returned to the immersion tank than is now added at the rate of one quarter per bird. This is capable of being achieved with only half the add water presently being used. No overflow discharge would therefore be required.

In the following example there is an established goal of recirculating a volume of water per minute equal to the volume of the immersion tank water in a thirty minute period. Other factors are that the recirculated water is superheated in tank 25 to 175° F. while using a heat exchanger 24 structured to reduce the temperature of the superheated water through heat exchange such that the filtered water flowing through heat exchanger 24 is raised to a temperature 5° F. higher when it exits the heat exchanger as sanitized heating liquid.

As other parameters involved in the example, the line speed of the conveyor moving the poultry through the immersion scalder is 140 birds per minute. The scalder (immersion tank), of the Low Boy type, is of a size allowing a conveyor pass of 140 feet therethrough, the birds being mounted on the conveyor at 6 inch centers thus equalling two minutes of scald time for each bird. The volume of the scalder is 3500 gallons of water, and the temperature of the potable ground water added is 65° F. The scald temperature of the immersion tank liquid is 128° F., and the recirculated water leaving the superheat operation through conduit 32 is 133° F. As will be shown, the rate of the recirculated volume of scald water equal to the volume of the scalder in a thirty minute period of time is 116 gallons per minute.

If one quarter of potable water per bird is added to the system via conduit 34 the make-up water is added at rate of 35 gallons per minute (one quarter per bird X 140 bpm).

To determine the maximum flow of recirculated sanitized water (through conduit 41) the number of BTU's required to heat up the make-up water must be determined. 35 gpm must be heated at mixing tank 36 from 65° F. to 128° F. With the weight of water at 8.345 lb./gal., the following equation applies: (35 gpm) (8.345 lb./gal.) (128° F. - 65° F.) = 18,400.7 BTU's per minute. This is the amount of heat energy required to heat all the make-up water.

The recirculated water leaves heat exchanger 24 at 133° F. The desired temperature at mixing tank 38 is 128° F. Each gallon of recirculated water at 133° F. will have 5° F. of heat that can be used to heat the make-up water. To determine the maximum recirculated and sanitized rate of flow, the following equation applies: 18,400.7 BTU per minute divided by (8.345 lb./gal.) (133° F. - 128° F.) = 441 gpm.

441 gallons per minute of recirculated and sanitized water at 133° F. will provide all the heat necessary to heat the make-up water.

If an overflow discharge is not required, and assuming that only one pint of make-up water per bird is added to maintain the water level of the scalder, the flow rate of the make-up water is 17.5 gpm which, when applying the above equation, yields about 220 gpm of recirculated water at 133° F.to provide all the heat necessary to add to the make-up water.

For a 3500 gallon capacity immersion tank at a flow rate of 220 gallons per minute, the present system is capable of recirculating a volume of water equal to the capacity of the scalder in 15.9 minutes using a make-up water add rate of one pint per bird. And, this has been accomplished with half the normal rate of make-up water. The actual system may be designed to recirculate a volume of water that would be at least equal to the 3500 gallons of water of tank 10 capacity in a 30 minute period which is a rate of 116 gallons per minute.

The foregoing example does not take into consideration the head trough heat exchanger 33, such that the potable water added to the system is supplied only through conduit 35 into the mixing tank.

When the head trough and its heat exchanger 33 are incorporated into the system, the heat exchange taking place in heat exchanger 33 is used to heat up the potable ground water fed via conduit 35 to head trough 18. Assuming the addition of one pint of water per bid to the system (17.5 gpm) as a total amount of water added to maintain the scalder full of water at 140 bpm, and assuming a rate of 3 gallons per minute of make-up water to the head trough via conduit 35, 14.5 gpm (17.5 - 3 gpm) of make-up water is added to mixing tank 38 via conduit 36. The potable water supplied to the head trough at 3 gpm will be heated from 65° F. to 90° F. which is less than the scald temperature of 128° F. since immersion of only the poultry heads in the head trough for the purpose intended does not require scalding. This heat is transferred from the recirculated water of heating liquid exiting heat exchanger 24 through conduit 32 and flowing through heat exchanger 33 in heat exchange relationship with the potable ground water likewise flowing therethrough.

To determine the maximum flow of recirculated sanitized water exiting heat exchanger 24 the amount of BTU's required to heat up the make-up water must be determined. 14.5 gpm must be heated at mixing tank 38 from 65° F. to 128° F. The head trough water must be heated from 65° F. to 90° F. at 3 gpm. Thus, (14.5 gpm) (8.345 lb./gal.) (128° F. - 65° F.) = 7,623 BTU per minute. And, (3 gpm) (8.345lb./gal.) (90° F. - 65° F.) = 626 BTU per minute, for the total of 8,249 BTU per minute to heat up all the make-up water.

The recirculated water in conduit 32 which exits heat exchanger 24 is at a temperature of 133° F. Since the desired temperature at mixing tank 38 is 128° F., each gallon of recirculated water at 133° F. will have 5° F. of heat that can be used to heat the make-up water supplied to the mixing tank. To figure the maximum recirculated flow with 8,249 BTU per minute to heat all the make-up water 8,249 BTU divided by (8.345lb./gal.) (133° F. - 128° F.) = 197.7 gpm. of recirculated water (heating liquid) at 133° F. will provide all the heat necessary to heat the make-up water. The recirculated volume, however, need not be this high. BTU's will be added to the mixing tank via steam injection through branch conduit 39 to provide the heat to elevate the temperature in the mixing tank to 128° F. Thus, to meet the goal of complete recirculated tank 10 volume in 30 minutes only 116 gpm need to be recirculated. Thus, the system may be designed to recirculate approximately 140 gpm given the aforedescribed parameters.

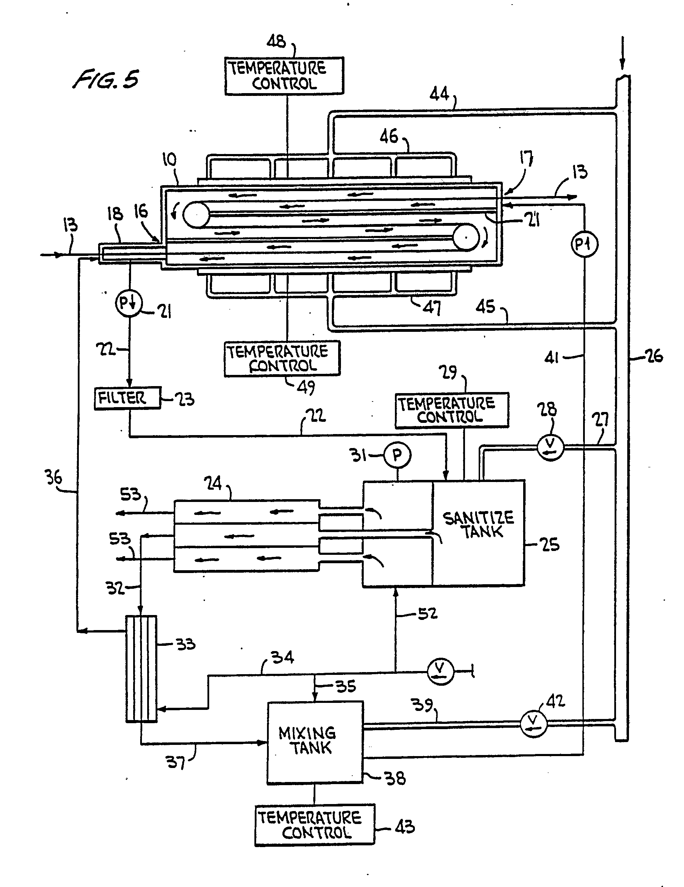

Another embodiment of the present system is set forth in Fig. 5 in which like elements are identified by like reference numerals used in Fig. 4. The same counterflow principle applies as described for Fig. 4 and the filtered water removed from the immersion tank is sanitized in sanitize tank 25, except that heated exchange takes place between the potable ground water and the sanitized, superheated liquid in heat exchanger 24, with the heated potable water being delivered to the picking station, hand wash stations, or other stations in the plant via lines 53. Thus, the system according to Figure 5 is useful in those situations where warmed potable water is desired for other plant operations, although the system has its limitations since the BTU's loss from the system into the warmed potable water is not recoverable. However, if the plant has a need for warm potable water the BTU's exchanged may not add to the cost operation of the plant as the water needs to be heated from some other source in any event.

The filtered scald water removed from the tank flows via conduit 22 into sanitize tank 25 where it is superheated to 175° F. as described above. However, potable ground water at 65° F. is supplied via conduit 52 for the flow through heat exchanger 24 in heat exchange relationship with the superheated liquid flowing therethrough from the sanitize tank. The potable water is thus warmed up and exits at 53 from the heat exchanger for supplying other designated stations through the plant. The potable water is heated from 65° F. to 90° F. in the process of heat exchange thereby reducing the superheated water temperature exiting at 32. If the temperature and flow rate are sufficiently high the liquid from the heat exchanger (line 32) will be directed to flow through head trough heat exchanger 33 for warming up the potable ground water flowing therethrough form line 34 such that the warmed fresh water through conduit 36 supplies the head trough. On the other head, if the temperature of the liquid at 32 is at scald temperature it may be returned directly to the immersion tank, or may bypass heat exchanger 33 and flow into mixing tank 38. If the temperature of the liquid at 32 is less than or greater than scald temperature it will be directed to the mixing tank such that the potable make-up water and the liquid through conduit 37 are mixed and brought up to scald temperature.

If the liquid from 32 is returned directly to the scalder bypassing the mixing tank then only preheated potable make-up water will be heated in the mixing tank. All water heated in the mixing tank will be pumped to the exit station of the scalder and will flow counter to the direction of the travel of the poultry through the scalder reaching the entrance station of the scalder where it will be removed thereby completing the counterflow loop.

In heat exchanger 24 the potable water is heated from 65° F. to 90° F. in the process of heat exchange from the superheated liquid. The BTU's required to heat the ground water from 65° F. to 128° F. at 17.5 gpm is 9200 BTU per minute as calculated hereinabove. To met the recirculated volume requirement of 30 minutes 116 gpm is recirculated. At. the sanitize tank the liquid is heated to 175° F. and is cooled in the heat exchanger after it exits at 32. The BTU's available in the superheated liquid at 175° F.available for the system to maintain the liquid at 128° F. scald temperature is 45,497 BTU per minute, i.e., 116 gpm X 8.345 lb./gal. X (175° F. - 128° F.). Subtracting the 9200 BTU per minute needed to heat the make-up water leaves 36,297 BTU per minute to be removed in the heat exchanger before the recirculated water reaches the mixing tank.

The BTU's required to heat one gallon of water from 65° F., to 90° F. is 208.62 BTU per gallon, i.e., 8.345 lb./gal. X (90° F. - 65° F.).

Required to be determined is the amount of potable water to be warmed to cool the superheated recirculated water, in heat exchange relationship in exchanger 24, so that when it is mixed with the make-up water the combined temperature will not exceed the 128° F.scald temperature.

Since 36,297 BTU per minute is required to be removed in the heat exchanger for 208.62 BTU per gallon of potable water, 174 gallons per minute of potable water will pass through the heat exchanger to cool the superheated liquid.

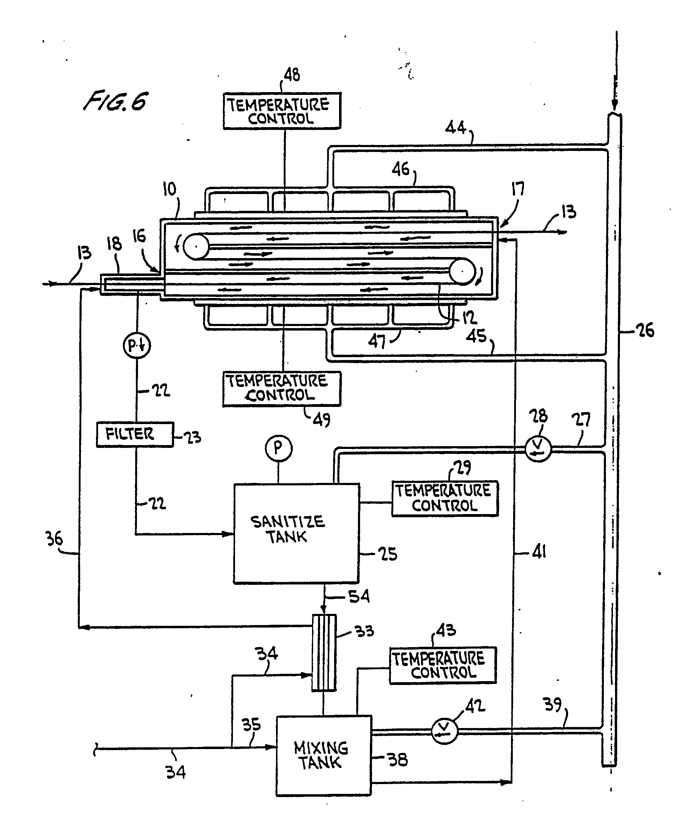

In the Figure 6 embodiment, counterflow immersion scalding is essentially the same as aforedescribed, and like reference numerals are used to identify like elements as in Figure 4. However, the liquid removed from the immersion tank and filtered at 23 flows at 22 into sanitize tank 25 where it is superheated to 175° F. Superheated liquid then flows at 54 through the head trough heat exchanger 33 in heat exchange relationship with the potable ground water flowing through exchanger 33 from 34. The warmed potable water flows through 36 to the head trough. And, the liquid from heat exchanger 33, at a reduced temperature, flows at 55 into the mixing tank where it is mixed with fresh potable make-up water and will be heated to the scald temperature. The recirculated and potable mix is then pumped via conduit 41 to the exit station of the scalder. This water will then counterflow against the bird movement to the entrance station of the scalder where it will be removed. This completes the counterflow loop.

In Figure 6, the filtered water at scald temperature flowing from conduit 22 to the sanitize tank is superheated to 176° F.. No heat exchanger is used to reduce the temperature of the superheated liquid as in Figures 4 and 5. The liquid flows at 54 to the head trough heat exchanger 33 and on to mixing tank 38.

Again, the make-up water at one pint per bird is 175. gpm. The head trough water heated from 65° F. to 90° F. is at 3 gpm. The remaining make-up water heated at the mixing tank is at 14.5 gpm. As in the exercise shown for Figure 4, 8,249 BTU per minute is required to heat all the make-up water. The recirculated liquid after being superheated has excess BTU's above the 128° F. desired scald temperature. Thus (8.345 lb.gal.) (175° F. -128° F.) = 392.21 BTU per gallon which is taken from the recirculated liquid at the mixing tank. To determine how much liquid at 175° F. can be recirculated in the system without overheating the make-up water, 8,249 BTU to heat the make-up water divided by 392.21 BTU per gallon of superheated water to be removed yields 21.03 gallons per minute which is the rate of flow of liquid that can be recirculated.

Although this is below the desired recirculated volume of 116 gpm required to recirculate a volume equal to the scalder, the Figure 6 arrangement has advantages over prior immersion scalding systems in that the recirculated liquid is filtered and cleaned, sanitized to remove bacteria and the make-up water is heated before being returned to the immersion tank.

The foregoing examples were given for soft-scald of chickens, although similar showings can be made for the advantages of the present system for a hard scald chicken scalder and for hard scalding turkeys.

Also, it can be shown that the BTU's required for the present system are substantially less than required for prior art systems. There are cost savings in make-up water expense compared to the cost in otherwise bringing water in and treating the effluent discharge in prior systems. By comparison, scalders using live steam injection utilize more energy to operate compared to the present system. The live steam injector scalders experience significant steam blow-by as the steam reaches the surface of the water in the scalder before it is completely dissipated in the water, and is thereby lost to the atmosphere.

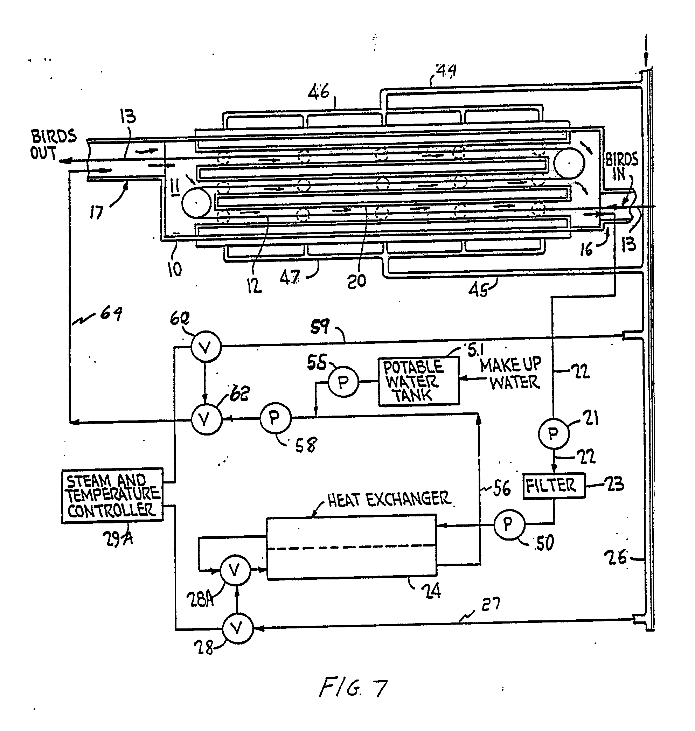

In the present system the BTU's necessary to heat the make-up water will be added in the sanitize and mixing tanks. This heat will be added by heat exchange plates or by steam injection into closed tanks in Figs. 4-6 or at the heat exchanger and at valve 62 in Figs. 7-8 discussed below. No steam will escape to the atmosphere as in the steam injection scalders to heat the add water. Some steam will be added to the scalder such that there may be some steam blow-by but not nearly as much compared to live steam injection scalders. The steam in the present invention is added to the immersion scalder only to replace surface loss and heat absorbed by the birds. The largest requirement for heat is to raise the temperature of the potable make-up water used in the scalding process.

Referring to Figs. 7-10, further embodiments of the present invention are shown. As shown in Fig. 7, the filtered liquid through conduit 22 flows through a heat exchanger 24 via a pump 50. The heat exchanger is fed with, for example, live steam injected (at about 175° F.) via a steam conduit 26 having a branch line 27 connected to the heat exchanger through steam valve 28 and a steam/water valve 28A. A suitable steam and temperature controller 29A may be set for operating valves 28 and 28A to maintain the temperature of the superheated steam to a desired level.

The filtered liquid from conduit 22 is typically at the same scald temperature of 128° F. as that in immersion tank 10. This filtered liquid flows through heat exchanger 24 and into heat exchange relationship with the live steam at or near the superheat temperature. This heat exchanger is constructed in any normal manner having a plurality of heat exchange plates effecting heat exchange between the oppositely directed flow of the liquid and steam therein, such that the filtered liquid increases in temperature as the superheated steam decreased in temperature during this heat exchange, and the heating liquid at the exit end of the heat exchanger flows into conduit 56 at a predetermined temperature of about 133° F., for example, which can be maintained by the heat exchanger and the controller 29A.

The injected steam functions to kill the bacteria in the filtered water as BTU's are added. The superheated recirculated water will then exit through heat exchanger 24 passing off heat to the incoming filtered water such that this completes the loop of the bacteria killing segment of the present system.

In a similar manner to the previously described embodiments, potable ground water used as make-up water for the system, typically at a temperature of about 65° F., is supplied from a source (not shown) into a potable water holding tank 51 and is pumped via a pump 55 into conduit 56. A recirculation pump 58 feeds the mixture of heating liquid and potable liquid in conduit 56 through the system. The temperature of the mixed liquid is maintained at the desired level via steam injection, or the like, as through a branch conduit 59 passing through a suitable valve 60 to a steam-to-water mixing valve 62. The temperature is maintained at the desired level by controller 29 which may regulate valve 62. The mixture of heating liquid and potable water in conduit 56 is heated to the scald temperature, which may be 128° F., so that the liquid in conduit 35 is returned to immersion tank 10 at exit station 17 for recirculating scald liquid at the scald temperature through tank 10 in a direction, at least at the exit station, opposite the direction of travel of the birds. The sanitized recirculating liquid being returned to the immersion tank through conduit 64 is substantially free of bacteria and includes make-up water which is heated partially by the heating liquid flowing through conduit 56 and supplemented by steam injection via branch conduit 59, so that cleaner water is recirculated through the immersion tank with the present system at a rate which may, for example, be about equal to the liquid volume of the immersion tank liquid in 30 minutes.

As live steam may also be injected into the immersion tank via branch conduits 44 and 45 and via manifold branches 46 and 47 to assure maintenance of liquid 11 in tank 10 at the desired scald temperature. Temperature control units (not shown) may be provided for sensing and regulating the temperature of liquid 11 in combination with suitable valving.

The energy requirementsthis embodiment are similar to the requirements discussed above except the reference numerals are different. For example, the scald temperature of the immersion tank liquid is 128° F., and the recirculated water leaving the superheat operation through conduit 32 is 133° F. As will be shown, the rate of the recirculated volume of scald water equal to the volume of scald water equal to the volume of the scalder in a thirty minute period of time is 116 gallons per minute. Also, if one quarter of potable water per bird is added to the system by pump 55, the make-up water is added at a rate of 35 gallons per minute (one quarter per bird x 140 bpm).

To determine the maximum flow of recirculated sanitized water (through conduit 64) the number of BTU's required to heat up the make-up water must be determined. 35 gpm must be heated at valve 62.

The recirculated water leaves heat exchanger 24 in conduit 32 at 133° F. The desired temperature at conduit 64 is 128° F.. Each gallon of recirculated water at 133° F. will have 5° F. of heat that can be used to heat the make-up water. To determine the maximum recirculated and sanitized rate of flow, the following equation once again applies: 18,400.7 BTU per minute divided by (8.345 lb./gal.) (1330° F. - 128° F.) = 441 gpm.

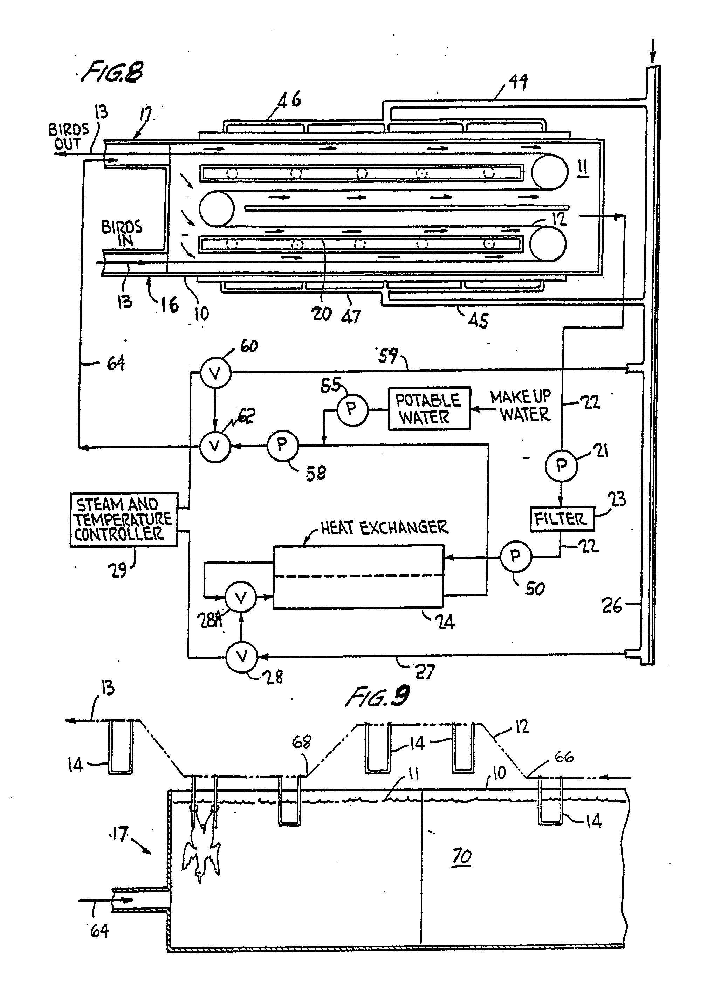

In Fig. 8, the same counterflow principle utilizing the recirculating system of Figure 7 applies, except that the entrance and exit stations 16 and 17 are located on the same end of the scalder. And, the scalder liquid 11 may be removed at a side of the tank opposite the end at which stations 16 and 17 are located. The system is otherwise the same as aforedescribed.

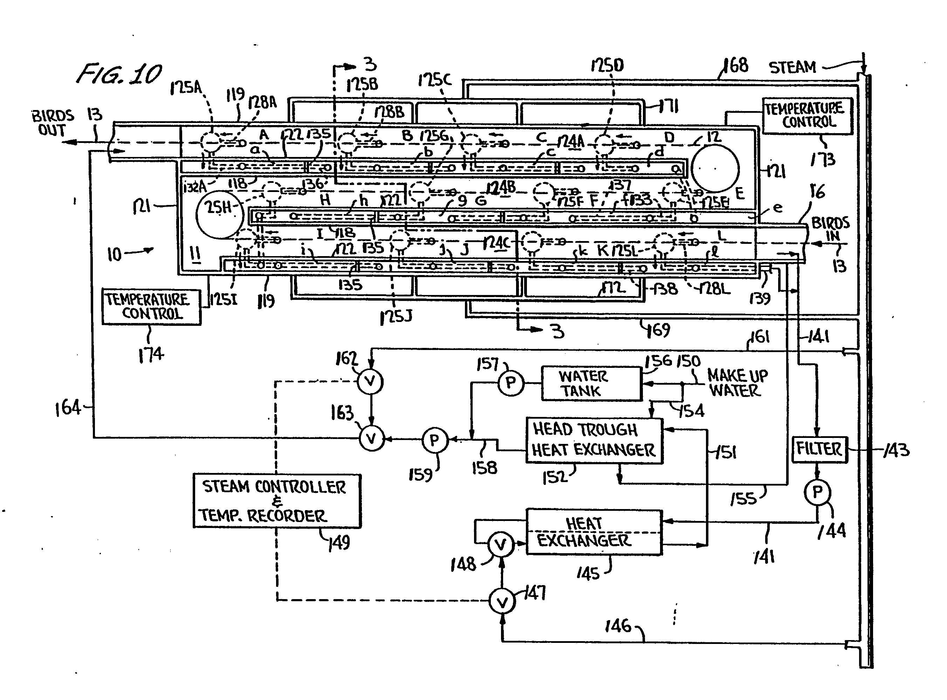

In accordance with another feature of the invention shown in Fig. 9, the conveyor may be arranged as having bends 66 and 68 between which the conveyor is at a higher elevation than necessary for immersing the birds in the scald liquid. At this transition station 70, located immediately upstream of exit station 17, the conveyor is intended to lift the birds at least partially out of the scald liquid for allowing the liquid in the bird feathers to drain before the birds are again immersed in the cleaned, sanitized, recirculated liquid fed into the exit station. When reimmersed into exit station 17 after draining, the clean recirculated liquid will replace the water that has been drained, which aids in the cleaning process of the invention.

Referring now to Figures 10-12, further embodiments of the invention are shown. The conveyor moves the birds from an entrance station L· at the tank to an exit station A at the tank in the direction of arrows 13. The scalder tank is constructed to direct the flow of water downwardly onto the birds being conveyed through the tank as in the manner illustrated in Figure 12. The tank may have one or more partition walls 18 depending on the number of conveyor passes designed for the tank. These walls are of substantially the same height as side walls 119 of the tank and end walls 121. And, the tank has internal walls 122 of less height compared to that of walls 118, 119, parallel thereto and forming with walls 118 and with one of walls 119, a chamber 123. As seen in Figure 10, the wall pairs 118, 122 and 119, 122 are closed at their opposite ends, with the internally formed chambers being respectfully spaced inwardly from the end walls of the tank to facilitate the reverse directions of the conveyor.

The tank other than the chambers defines troughs 124 along with which poultry is moved in the direction of arrows 13, troughs 124 communicating with chambers 123.

External liquid pumps 125A to 125L are mounted externally to the tank for drawing liquid from the tank via conduits 128A to 128L, respectively. At trough 124, as seen in Figure 10, pumps 125A to 125D are associated with trough 124a for drawing liquid from the bottom thereof, pumps 125E to 125H are associated with trough 124b for drawing liquid from the bottom thereof, and pumps 125I to 125L are associated with trough 124c for drawing liquid from the bottom thereof, in a manner to be described more fully hereinafter.

The pumps have branch conduits 132A to 132L for respectively pumping drawn liquid into the chambers such that the liquid in he chambers flows upwardly over the tops of walls 122 and downwardly onto the birds, as agitated tank liquid.

The chambers may be provided with transverse walls 135 for dividing the chambers into sections a through 1 respectively associated with exit station A, intermediate stations B to K, and entrance station L.

Additional branch conduits 133A to 133L are respectively associated with the pumps.

The external pumps and pump conduits operate to counterflow the tank liquid in stages from the exit station through the intermediate stations and to the entrance station and thereafter outwardly of the tank as will be described. In such manner, tank liquid is pumped in an upstream direction relative to the direction of movement of the birds.

Pump 125A pumps the liquid from station A via 128A and into chamber section a via 132A, as well as into chamber section b via 133A. Pump 125B pumps the liquid from intermediate station B via 128B, into chamber section b via 132B and into the upstream chamber section c via 133B. And, the pumps at the remaining intermediate stations pump liquid with from those stations into the associated chamber sections at each such station and into each upstream chamber section at each upstream tank station. At intermediate station K, pump 125K functions in the same manner except that its branch conduit 133K pumps liquid into chamber section 1 at entrance station L. Finally, pump 125L pumps liquid from the tank at station L, into chamber section 1 and outwardly of the tank via conduit 139.

The bacteria contaminated water exiting conduit 139 at bird entrance station L flows via conduit 141 through a screening and filtering station 143 at which wood chips, sand and other particles removed from the birds while in the scalder will be filtered and screened from the removed scald water with the benefits discussed above.

The filtered liquid through conduit 141 is pumped via a pump 144 through a heat exchange 145. The heat exchanger is fed with, for example, recirculated water heated via a steam conduit 146 connected to a steam valve 147 and a steam/water valve 148. A suitable steam and temperature controller 149 may be set for operating valve 147 to maintain the temperature of the superheated water to a desirable level.

The filtered liquid for conduit 141 is typically at the same scald temperature of a 128° F. as that in immersion tank 10. This filtered liquid flows through heat exchanger 145 and into a water-stream mixing valve with the live steam at the superheated temperature. This heat exchanger is constructed in a normal manner having a plurality of heat exchange plates effecting heat exchange between the oppositely directed flow of liquid, such that the filtered liquid increases in temperature as the superheated liquid decreases in temperature during this heat exchange, and the heating liquid at the exit end of the heat exchanger flows into conduit 151 at a predetermined temperature of about 130° F., for example, which can be maintained by the heat exchanger and the controller 149.

The injected steam functions to kill the bacteria in the filtered water as BTU's are added and the water temperature rises. The superheated recirculated water will then exit through heat exchanger 145 passing off heat to the incoming filtered water so that this completes the loop of the bacteria killing segment of the system.

The still very warm liquid in conduit 151 then passes through another heat exchanger 152 provided trough 117 with the conveyor arranged relative thereto as discussed above for immersing the heads only in the tank liquid before being fully immersed in the main portion of the tank.

Potable ground water, typically at a temperature of about 65° F., is supplied at 150 from a source (not shown) through conduit 154 to heat exchanger 152 and exits through conduit 155 after passing heat exchange relationship with heating liquid flowing from conduit 151 through heat exchanger 152. Heat exchanger 152 is constructed so as to elevate the temperature of the ground water to about 90° F. after passing therethrough in heat exchange relationship with the heating liquid. The liquid in conduit 155 flows into shallow head trough 117 as fresh water which will overflow into the maintain portion of the immersion tank. This fresh water will be part of the fresh-potable ground water required to be added to the immersion tank for replenishing any loss of liquid form the tank as carried out by the birds and for maintaining scalder tank overflow if desired. As before, only the heads of the birds are immersed in the head trough containing clean water.

The potable ground water used as make-up water for the system likewise flows into a potable water holding tank 156 and is pumped via pump 157 into a conduit 158 through which the heating liquid exits heat exchanger 152 in a similar manner to that described above. A recirculation pump 159 feeds the mixture of heating liquid and potable liquid in conduit 158 through the system. The temperature of the mixed liquid is maintained at the desired level via steam injection or the like, as through a branch conduit 161 passing through a suitable valve 162 to a steam-water mixing valve 163. The temperature is maintained at the desired level by control 49 which may regulate valve 162. The mixture of heating liquid and potable water in conduit 158 is heated to the scald temperature through the tank in the direction opposite the direction of travel of the birds. The sanitized recirculating liquid being returned to the immersion tank through conduit 164 is substantially free of bacteria and includes make-up water which is heated partially by the heating liquid flowing through conduit 158 and supplemented by steam injection via branch conduit 161, so that cleaner water is recirculated through the immersion tank with the present system at a rate which may, for example, be about equal to the liquid volume of the immersion tank liquid in 30 minutes.

Live steam may also be injected into one or more of the external conduits associated with the pumps as at 165, 166 and/or 167. The live steam is conducted via branches 171, 172 to assure maintenance of liquid 11 in tank 10 at the desired scald temperature. Temperature control units 173, 174 may be provided for sensing and regulating the temperature of liquid 11 in combination with valving (not shown) in branch lines 168, 169. However, unlike the systems discussed above , the steam is injected indirectly into the tank via the external pump piping so as to avoid overheating the birds, and avoiding steam blow-by in that the steam will be fully dissipated before reaching the liquid surface. The scalder tank may thus be made shallower and narrower compared to other scalders.

The energy requirements to heat the make-up water and the BTU's provided for the aforedescribed system by the superheat operation for the counterflow immersion scalding system of the invention are very similar to those discussed above with the following slight differences.

First, heat exchanger 46 is structured to reduce the temperature of the superheated water through heat exchange such that the filtered water flowing through heat exchanger 45 is lowered to a temperature 5° F. higher when it exits the heat exchanger as sanitized heating liquid then when it entered as contaminated scald water. Also, the scald temperature of the immersion tank liquid is 128° F., and the recirculated water leaving the superheat operation through conduit 151 is 133° F.

If one pint of potable water per bird is added to the system via conduit 150 the make-up water is added at a rate of 17.5 gallons per minute (one pint per bird X 140 bpm). To determine the maximum flow of recirculated sanitized water (through conduit 164) the number of BTU's required to heat up the make-up water must be determined. 17.5 gpm must be heated from 65° F. to 128° F. With the weight of water at 8.345 lb./gal., the following equation applies: (17.5gpm) (8.345 lb./gal.) (128° F. - 65° F.) = 9,200.35 BTU's per minute. This is the amount of heat energy required to heat all the make-up water.

The recirculated water leaves heat exchanger 145 at 133° F., and the desired scald temperature is 128° F. Each gallon of recirculated water at 133° F. will have 5° F. of heat that can be used to heat the make-up water. To determine the maximum recirculated and sanitized rate of flow, the following equation applies: 9,200.35 BTU per minute divided by (8.345 lb./gal.) 133° F. - 128° F.) = 220.5 gpm.

220.5 gallons per minute of recirculated and sanitized water at 133° F. will provide all the heat necessary to heat the make-up water.

For a 3500 gallon capacity immersion tank at a flow rate of 220.5 gallons per minute, the present system is capable of recirculating a volume of water equal to the capacity of the scalder in 15.9 minutes using a make-up water add rate of one pint per bird. And, this has been accomplished with half the normal rate of make-up water. The actual system may be designed to recirculate a volume of water that would be at least equal to the 3500 gallons of water of tank 10 capacity in a 30 minute period which is a rate of 116 gallons per minute.

The foregoing example does not take into consideration the head trough or the head trough heat exchanger 152, such that the potable water added to the system is supplied only through conduit 150.

When the head trough and its heat exchanger 52 are incorporated into the system, the heat exchange taking place in heat exchanger 152 is used to heat up the potable ground water fed via conduit 155 to head trough 17. Assuming again the addition of one pint of water per bird to the system (17.5 gpm) as a total amount of water added to maintain the scalder full of water at 140 bpm, and assuming a rate of 3 gallons per minute of make-up water to the head trough via conduit 155, 14.5 gpm (17.5 - 3 gpm) of make-up water is added via conduit 150. The potable water supplied to the head trough at 3 gpm will be heated from 65° F. to 90° F. which is less than the scald temperature of 128° F. This heat is transferred from the recirculated water or heating liquid exiting heat exchanger 152 through conduit 158 and flowing through heat exchanger 152 in heat exchange relationship with the potable ground water likewise flowing therethrough.

To determine the maximum flow of recirculated sanitized water exiting heat exchanger 152 the amount of BTU's required to heat up the make-up water must be determined. 14.5 gpm must be heated from 65° F. to 128° F. The head trough water must be heated from 65° F. to 90° F. at 3 gpm. Thus, (14.5 gpm) (8.345 lb./gal.) (128° F. - 65° F.) = 626 BTU per minute, for a total of 8,249 BTU per minute to heat up all the make-up water.

The recirculated water in conduit 151 which exits heat exchanger 145 is at a temperature of 133° F. Since the desired temperature is 128° F., each gallon of recirculated water at 133° F. will have 5° F. of heat that can be used to heat the make-up water supplied. To figure the maximum recirculated flow with 8,249 BTU per minute to heat all the make-up water, 8,249 BTU per minute to heat all the make-up water, 8,249 BTU divided by (8.345 lb./gal.) (133° F. - 128° F.) = 197.7 gpm. of recirculated water (heating liquid) at 133° F. will provide all the heat necessary to heat the make-up water. The recirculated volume, however, need not be this high. BTU's will be added via steam injection through branch conduit 61 to provide the heat to elevate the temperature to 128° F. Thus, to meet the goal of complete recirculated tank 10 volume in 30 minutes only 116 gpm needs to be recirculated. Thus, the system may be designed to recirculate approximately 140 gpm given the aforedescribed parameters.

In the present system the BTU's necessary to heat the make-up water will be added at heat exchanger 145 via valve 148 and at valve 163. Thus, no steam will escape to the atmosphere as in the steam injection scalders to heat the added water. Some steam will be added to the scalder as at 165, 166 and/or 167 such that the steam will be fully dissipated before reaching the surface thereby eliminating steam blow by experienced with live steam injection scalders and avoiding any overheating of the birds. The present scalder can therefore be shallower compared to typical steam injection scalders, and can be both shallower and narrower compared to prior scalders using internal heat exchange plates given that the birds conveyed in the present scalder need not be distanced from such heat exchange plates as before.

Moreover, the present counterflow system avoids water swells in the tank otherwise created as the birds drag water with them during passage through the scalder. According to that embodiment of the invention shown in Figures 10-12, the liquid is counterflowed externally of the pass of the travel of the birds, thus assuring that the birds remain fully immersed in the scald liquid without the need to deepen the scald tank.

As an example of this counterflow system, 500 gpm is pumped from exit station A via conduit 128A with 343 gpm being pumped via conduit 132A into chamber section 1, and 157 gpm being counterflowed into the next adjacent chamber section b via conduit 133A.

Assuming that 17.5 gpm is carried out on the birds, 154.5 gpm is pumped into the scalder via conduit 164, 140 gpm is reprocessed water and 14.5 gpm is potable make-up water that was mixed in at the sanitizing portion of the process. 343 gpm is recirculated from station A to chamber section a, and 20 gpm is dragged into station A by the birds. Thus, 500 gpm is pumped in at station A and 500 gpm is pumped out of this station.

Liquid counterflow from each intermediate station B-J, from that intermediate station to the adjoining intermediate station upstream thereof relative to the direction of bird movement, is essentially the same. And, the counterflow from intermediate station K to entrance station L is the same as will be described with reference to the intermediate stations.

First, as a typical example of counterflow from one intermediate station to the next and rom the last intermediate station K to entrance station L, 500 gpm is pumped from station B via conduit 128B with 343 gpm pumped into section b via conduit 132B, and 157 gpm counterflowed to section c via conduit 133B. Since 157 gpm is counter-flowed in from station A, 343 gpm is recirculated from station B to section b. 20 gpm is dragged into station B by the birds, and 20 gpm is dragged out of station B by the birds, such that 500 gpm is pumped into station B and 500 gpm is pumped out of this station.

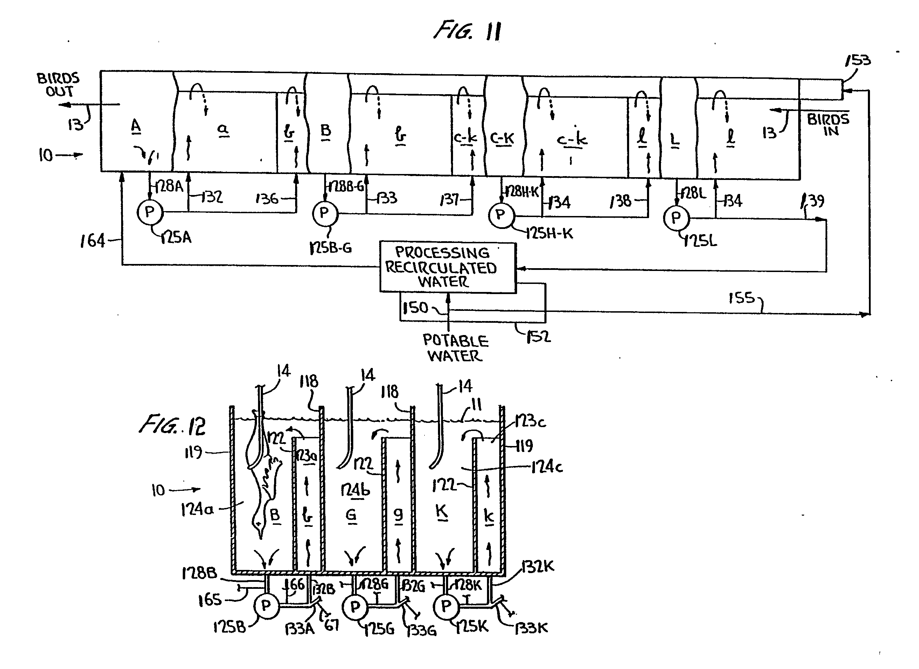

At the bird entrance station L, 500 gpm is pumped from station L via conduit 128L with 360 gpm pumped into section 1 via conduit 132L. 140 gpm is pumped via conduit 139 (fig. 11) into the hot water sanitizing process. 157 gpm is counter-flowed in from section K, 360 gpm is recirculated form station L to chamber section 1, 3 gpm of potable water flows to head trough 117 and then to the scald tank, and 20 gpm is dragged out of section L by the birds. Thus, 500 gpm is pumped into station L, and 500 gpm is pumped out of this station.

From the foregoing it can be seen that many modifications and variations of the present invention are made possible in light of the above teachings. It is therefore to be understood that within the scope of the appended claims the invention may be practiced otherwise than as specifically described.

## Claims

1. A poultry scalding system comprising, an open immersion tank adapted to contain scalding liquid at a predetermined scald temperature, conveyor means positioned above said tank for moving poultry in one direction through said tank from an entrance station to an exit station at said tank while the poultry is immersed in the liquid as the poultry hangs by the legs from said conveyor means, liquid recirculating means connected to said tank for recirculating the liquid at least at said exit station and in a direction opposite said one direction in a given period of time during operation of said conveyor means by removing the liquid at other than said exit station and returning a quantity of liquid to said tank at said exit station, means for replenishing any loss of liquid from said tank, said recirculating means including means for filtering the liquid removed, and means for heating replenished liquid to said scalding temperature before being returned to said tank.

2. The system according to claim 1, wherein said recirculating means comprises means external to said tank for counterflowing the liquid in stages from the exit station, through at least one intermediate station and to said entrance station in the opposite direction.

3. A poultry scalder comprising, an open immersion tank adapted to contain scalding liquid, said tank having internal wall means defining at least one chamber, said tank other than said chamber defining a trough in communication with said chamber, said trough being adapted for immersing poultry conveyed in one direction therealong, and means mounted externally to said tank for counterflowing the liquid in stages in a direction opposite said one direction.

4. The scalder according to claim 3, wherein said tank has poultry exit and entrance stations and an intermediate station, said counterflowing means comprising a plurality of pumps connected to both said trough and said chamber for pumping the liquid from and into said exit station and into said intermediate station, from and into said intermediate station and into said entrance station, and from and into said entrance station and outwardly of said tank.

5. The scalder according to claim 4, wherein said tank has side and end walls of a predetermined height, said internal wall means comprising at least one chamber wall of a height less than said predetermined height such that the liquid may flow from said chamber to said trough.

6. The system according to claim 2, wherein said counterflowing means comprises means for pumping the liquid from and into said exit station and into said intermediate station, from and into said intermediate station and into said entrance station, and from and into said entrance station and outwardly of said tank.

7. The system according to claim 1 or 2, wherein said heating means is coupled downstream of said filter means into said recirculating means and comprises heat exchange means and means for feeding liquid to said heat exchange means at a first temperature above said scalding temperature, filtered liquid at said scald temperature being in heat exchange relationship in said heat exchange means with the liquid at said first temperature for elevating the temperature between said first and said scald temperatures, and said recirculating means having a closed tank downstream of said heat exchanger means for pooling said second temperature liquid with said replenished liquid to said scald temperature.

8. The system according to claim 1 or 2, wherein said conveyor means is positioned above said tank at a first elevation at which the poultry is immersed in the scalding liquid, said tank having a transition station immediately upstream of said exit station relative to said one direction, said conveyor means being positioned at said transition station above said tank at a second elevation greater than said first elevation for lifting the poultry at least partially out of the scalding liquid allowing the liquid in the bird feathers to drain before the poultry is again immersed in the recirculated liquid at said exit station.

9. The system according to claim 1 or 2, wherein said immersion tank has a shallow liquid filled head trough at said entrance station, said conveyor means being position above said trough for moving poultry in said one direction through said trough while the head only of the poultry is immersed in the trough liquid as it hangs by the legs from said conveyor means.

10. The system according to claim 9, wherein said recirculating means has a head trough heat exchanger between said heat exchange means and said heated tank and through which the replenished liquid flows to said trough at a third temperature between the temperature of the replenished liquid and the scald temperature.

11. The system according to claim 6, wherein said tank has internal wall means defining at least one chamber into which the liquid is pumped at said stations by said pumping means, said tank other than said chamber defining a trough in communication with said chamber and along which the poultry is moved in said one direction.

12. The system according to claim 1 or 2, wherein said heating means includes steam injection means connected to said counterflowing means external to said tank to maintain the temperature of the scalding liquid in said tank at a predetermined scald temperature.

13. A poultry scalding process, comprising the steps of immersing poultry in an open immersion tank adapted to contain scalding liquid at a predetermined scald temperature, the immersing step being carried out by conveying the poultry in one direction through the tank from an entrance station to an exit station at said tank while the poultry hangs by the legs, recirculating the scalding liquid at least at said exit station and in a direction opposite said one direction during poultry conveying in a predetermined time interval by removing the liquid at other than the exit station, supplying unheated add-on liquid to the removed liquid to form recirculated liquid, heating the recirculated liquid to the scald temperature and returning the heated recirculated liquid to said tank at said exit station.

14. The process according to claim 13, wherein said heating step comprises heating the removed liquid to a temperature above said scald temperature to form heating liquid, and combining the heating liquid with the add-on liquid to heat up the recirculated liquid to said scald temperature.

15. The process according to claim 13, further comprising the step of lifting the immersed poultry at least partially out of the scalding liquid prior to said exit station for allowing the liquid in the feathers to drain, and again immersing the poultry in the recirculated liquid at said exit station.

16. The process according to claim 13, wherein the recirculating step includes the step of filtering the removed liquid prior to heating the recirculated liquid.

17. The process according to claim 13, wherein said recirculating step includes counterflowing the liquid in stages, by means external to the tank, from said exit station, through at least one intermediate station and toward said entrance station in the opposite direction.

18. The process according to claim 17, wherein said counterflowing is carried out by pumping the liquid from and into the exit station and into the at least one intermediate station, pumping the liquid from and into the at least one intermediate station and into the entrance station, and pumping the liquid from and into the entrance station and outwardly of the tank.

19. The process according to claim 13, wherein the liquid is pumped into at least one chamber of said tank at said stations, the poultry being conveyed in said one direction along a trough defined in the tank adjacent the chamber.

FIG.1

FIG.2
(PRIOR ART)

FIG.3
(PRIOR ART)

FIG.4

FIG. 5

*FIG.6*

FIG. 7

FIG.8

BIRDS OUT

BIRDS IN

46

44

17

13

11

12

13

16

10

20 47

45

64

60

59

V

62

55

P

POTABLE WATER

MAKE UP WATER

22

V

P

21

58

P

STEAM AND TEMPERATURE CONTROLLER

HEAT EXCHANGER

FILTER

23

29

28A

V

24

50

22

V

26

28

27

FIG.9

13

14

68

14

12

17

11

10

66

70

14

64

FIG. 10

FIG. 11

BIRDS
OUT

13

10 →

A          a          g     B          g          c-k  C-K        c-k          l    L          l      13   BIRDS
                                                                    1                                              IN

153

164

128A    132    136    128B-G    133    137    128H-K    134    138    128L    134    139

P                    P                    P                    P

125A              125B-G              125H-K              125L

PROCESSING
RECIRCULATED
WATER

150          152          155

POTABLE
WATER

FIG. 12

14  118    14  118    14  11    123c

119                                    119

112    123a              112              122    124c

10 →
124a      B      g        124b  G      g        122    K      k

128B    166  132B    128G  132G    128K    132K

165

P                P                P

125B  133A  67    125G  133G    125K  133K

**European Patent Office**

**EUROPEAN SEARCH REPORT**

Application number

EP 90103248.2

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| A | <u>DE - C2 - 1 429 939</u><br>(GAINESVILLE)<br>* Claims 1-3 *<br>-- | 1-5 | A 22 C 21/04 |
| A | <u>DE - C3 - 1 507 915</u><br>(SVERIGES)<br>* Claim 1 *<br>-- | 1-5 | |
| A | <u>FR - A1 - 2 561 500</u><br>(PAGAN)<br>* Abstract; fig. 4-6 *<br>-- | 1-5 | |
| A | <u>US - A - 4 566 151</u><br>(WARREN)<br>* Abstract; fig. 1 *<br>-- | 1-5,<br>14-19 | |
| D,A | <u>US - A - 4 868 950</u><br>(HARBEN)<br>* Claim 1; fig. 1 *<br>---- | 1-5 | |

TECHNICAL FIELDS
SEARCHED (Int Cl⁵)

A 22 C 21/00

The present search report has been drawn up for all claims

| Place of search | Date of completion of the search | Examiner |
|---|---|---|
| VIENNA | 02-05-1990 | HAMMER |